# FASCICULE DE BREVET EUROPEEN

(11) **EP 3 299 649 B1**
(45) Date de publication et mention de la délivrance du brevet: **07.08.2019**
(21) Numéro de dépôt: 17193011.8
(22) Date de dépôt: 25.09.2017
(51) Int. Cl.: F16C 33/78, F16C 33/80

(54) **PALIER À ROULEMENT ÉQUIPÉ D'UN DISPOSITIF D'ÉTANCHÉITÉ**
WÄLZLAGER, DAS MIT EINER ABDICHTVORRICHTUNG AUSGESTATTET IST
ROLLER BEARING PROVIDED WITH A SEALING DEVICE

(30) Priorité: 26.09.2016 FR 1659015
(43) Date de publication de la demande: 28.03.2018
(73) Titulaire: NTN-SNR Roulements, 74000 Annecy (FR)
(72) Inventeur: MOREL, Bertrand, 74910 Challonges (FR)
(74) Mandataire: Sayettat, Julien Christian

(56) Documents cités:
- EP-A1- 1 260 724
- EP-A1- 2 636 915
- DE-A1-102011 003 704
- JP-A- 2010 060 127
- JP-A- 2010 065 800
- JP-A- 2012 116 429
- JP-A- 2013 061 048

## Description

L'invention concerne un palier à roulement comprenant deux organes, respectivement intérieur et extérieur, ainsi que des corps roulants disposés dans un espace de roulement formé entre lesdits organes pour permettre leur rotation relative autour d'un axe.

En particulier, l'invention s'applique aux paliers à roulement de véhicule automobile, notamment aux paliers de roue. De façon avantageuse, un palier suivant l'invention permet le montage d'une roue motrice ou non motrice de véhicule automobile, l'organe intérieur étant tournant et comprenant des moyens de fixation de la roue tandis que l'organe extérieur est fixe et comprend des moyens de fixation sur un élément de suspension du véhicule.

Pour empêcher d'une part les fuites de lubrifiant présent dans l'espace de roulement et d'autre part la contamination dudit espace avec des polluants extérieurs, au moins un côté de l'espace de roulement peut être équipé d'un dispositif d'étanchéité, comme illustré dans les documents JP2010060127A, JP2013061048A, EP1260724A1 ou DE102011003704A1.

En particulier, le dispositif d'étanchéité peut comprendre une armature solidaire d'un premier organe et une paroi solidaire du deuxième organe, ladite armature étant équipée d'un élément d'étanchéité dynamique qui présente au moins une lèvre disposée en contact frottant sur une portée intérieure de la paroi.

Pour satisfaire aux cahiers des charges de plus en plus sévères relativement à l'étanchéité, notamment pour la validation des paliers de roue par les constructeurs automobiles, cette solution conduit à un couple de frottement important qui, outre l'impact négatif sur l'énergie nécessaire à la rotation du palier, provoque un niveau de température de fonctionnement élevé et donc une usure prématurée de la lèvre frottante. En outre, cette usure est d'autant plus rapide que des polluants peuvent rentrer au niveau de la portée de frottement et y demeurer lors de la rotation.

Pour tenter de résoudre ce problème, on peut proposer d'ajouter des déflecteurs pour former une chicane d'entrée dans l'espace de roulement, limitant ainsi les échanges entre ledit espace et l'extérieur, notamment au niveau de la portée de frottement.

En particulier, le palier à roulement peut être équipé d'une armature présentant un secteur extérieur qui est disposé en regard d'une portion extérieure de la paroi du deuxième organe en formant à leur interface un jeu réduit d'étanchéité, comme montré dans le document DE102011003704A1 qui divulgue le préambule de la revendication 1.

L'invention vise à perfectionner l'art antérieur en proposant notamment un palier à roulement équipé d'un dispositif d'étanchéité dont l'interface d'étanchéité est optimisée tout en limitant le couple de frottement induit.

A cet effet, l'invention propose un palier à roulement selon la revendication 1.

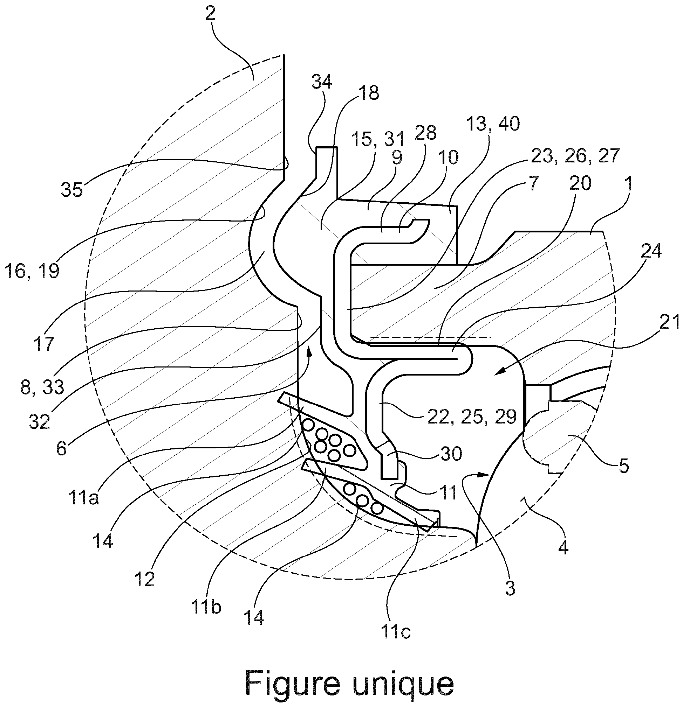

D'autres objets et avantages de l'invention apparaîtront dans la description qui suit, faite en référence à la figure annexée qui représente partiellement et en coupe longitudinale un palier à roulement équipé d'un dispositif d'étanchéité selon un mode de réalisation de l'invention.

En relation avec cette figure, on décrit ci-dessous un palier à roulement, en particulier pour le montage d'une roue motrice ou non motrice d'un véhicule automobile.

Le palier comprend deux organes, à savoir sur la figure un premier organe 1 disposé extérieurement en étant fixe et un deuxième organe 2 disposé intérieurement en étant tournant. Dans l'application considérée, la roue est destinée à être associée à l'organe intérieur 2 et l'organe extérieur 1 peut présenter des moyens de fixation du palier sur un élément de suspension du véhicule automobile.

Entre ces deux organes 1, 2, un espace de roulement 3 est formé pour permettre la rotation relative desdits organes autour d'un axe. Dans cette description, les termes de positionnement dans l'espace sont pris en référence à l'axe de rotation du palier. En particulier, le terme « intérieur » est relatif à une disposition proche de cet axe et le terme « extérieur » est relatif à une disposition à distance de cet axe.

Pour permettre la rotation, chaque organe 1, 2 peut présenter deux pistes de roulement espacées axialement de sorte à former dans l'espace de roulement 3 deux chemins de roulement dans lesquels sont disposées respectivement une rangée de corps roulants 4, lesdits corps roulants se présentant par exemple sous la forme de billes qui sont maintenues dans une rangée par l'intermédiaire d'une cage de rétention 5.

Toutefois, l'invention n'est pas limitée à un mode de réalisation du palier, en particulier relativement à la géométrie des corps roulants 4, à la géométrie et/ou à la disposition relative des organes fixe 1 et tournant 2.

L'espace de roulement 3 débouche à l'extérieur par l'intermédiaire d'au moins une ouverture annulaire 6 qui est formée entre les organes 1, 2. En relation avec les figures, l'ouverture annulaire 6 est délimitée entre une excroissance 7 du premier organe 1 et une paroi 8 du deuxième organe 2, ladite ouverture s'étendant sensiblement radialement à leur interface. En particulier, l'excroissance 7 est sous la forme d'un anneau de section rectangulaire qui s'étend axialement en direction de la paroi 8.

Pour empêcher d'une part les fuites de lubrifiant présent dans l'espace de roulement 3 et d'autre part la contamination dudit espace avec des polluants extérieurs, notamment à base de boues, l'ouverture annulaire 6 est équipée d'un dispositif d'étanchéité.

Le dispositif d'étanchéité comprend une armature 9 solidaire du premier organe 1 et la paroi 8 solidaire du deuxième organe 2. En particulier, l'armature 9 peut présenter un cadre rigide 10 réalisé en matériau métallique, notamment par pliage d'une tôle emboutie, qui est associé au premier organe 1. Par ailleurs, la paroi 8 peut être formée directement sur le deuxième organe 2.

L'armature 9 est équipée d'un élément d'étanchéité dynamique 11 qui présente au moins une lèvre 11a-11c disposée en contact frottant sur une portée intérieure 12 de la paroi 8. Dans le mode de réalisation représenté, un corps 13 est associé au cadre rigide 10 de l'armature 9, ledit corps formant l'élément d'étanchéité dynamique 11.

Selon une réalisation avantageuse, le corps 13 est associé par surmoulage au cadre rigide 10. En particulier, le corps 13 peut être réalisé en matériau souple, par exemple en élastomère, notamment à base de copolymère butadiène nitrile (NBR), éventuellement renforcé mécaniquement par des charges telles que du noir de carbone, de NBR hydrogéné (HNBR), de fluoropolymère ou de polyacrylate.

Dans le mode de réalisation représenté, l'étanchéité dynamique est améliorée en prévoyant que l'élément d'étanchéité 11 présente deux lèvres 11a, 11b qui sont espacées radialement en étant chacune en contact frottant sur la portée intérieure 12 de la paroi 8. En particulier, le contact est réalisé sur une portion sensiblement radiale de la portée intérieure 12.

Par ailleurs, la figure montre un élément d'étanchéité dynamique 11 présentant une lèvre annexe 11c qui est en contact frottant sur une portion sensiblement axiale de la portée intérieure 12. En outre, un cordon de lubrifiant 14 est disposé entre les lèvres 11a-11c adjacentes pour limiter le couple de frottement.

L'armature 9 est équipée d'un secteur extérieur 15 qui est disposé en regard d'une portion extérieure 16 de la paroi 8 en formant à leur interface un jeu réduit 17 d'étanchéité. En particulier, la taille et la géométrie du jeu 17 peuvent être agencées pour, sans induire de couple supplémentaire, contribuer à la fiabilité de l'étanchéité conférée en limitant les échanges au travers de l'ouverture 6, notamment vers la portée intérieure 12 de frottement.

Pour ce faire, suivant l'invention, le secteur extérieur 15 présente une portée convexe 18 qui est disposée au moins partiellement dans une gorge concave 19 formée dans la portion extérieure 16 de la paroi 8, le jeu réduit 17 d'étanchéité étant formé au moins partiellement à l'interface entre ladite portée convexe et ladite gorge. Ainsi, la sinuosité du jeu réduit 17 améliore l'étanchéité conférée, notamment relativement à l'introduction directe de polluant au travers de l'ouverture 6. En outre, l'interface courbe permet d'obtenir une fonction de type « goutte d'eau » de retenue des fluides en stagnation au niveau de l'ouverture 6.

Dans le mode de réalisation représenté, la portée de frottement 12 des lèvres 11a-11c n'est pas disposée en regard radial du jeu réduit 17 ce qui, en évitant que les polluants ne puissent tomber directement au niveau de cette portée 12, permet de limiter l'usure desdites lèvres. En particulier, il est alors possible de mieux maîtriser l'interférence entre les lèvres 11a-11c et la portée intérieure 12, afin notamment de pouvoir optimiser le couple de frottement nécessaire à la fiabilisation dans le temps de l'étanchéité.

De façon avantageuse, la gorge 19 est directement formée, notamment par usinage, dans la portion extérieure 16 de la paroi 8 du deuxième organe 2. Par ailleurs, au moins la portion extérieure 16 de la paroi 8 s'étend radialement, le secteur extérieur 15 et l'excroissance 7 étant disposés en regard axial par rapport à ladite portion. De façon avantageuse à l'encontre d'une introduction radiale de polluants, le jeu réduit 17 d'étanchéité peut alors présenter une géométrie annulaire qui est formée axialement en s'étendant essentiellement radialement à l'interface entre le secteur extérieur 15 et la portion extérieure 16 de la paroi 8.

Dans le mode de réalisation représenté, l'armature 9 est fixée à l'excroissance 7 du premier organe 1 par l'intermédiaire d'une portée d'association 20, notamment par emmanchement. L'élément d'étanchéité dynamique 11 - respectivement le secteur extérieur 15 - est disposé à l'intérieur - respectivement à l'extérieur - de la portée d'association 20.

De façon avantageuse, le secteur extérieur 15 délimite une chambre annulaire 21 débouchant d'une part, dans l'espace de roulement 3 et, d'autre part, dans le jeu réduit 17 d'étanchéité. En particulier, la portée 12 de frottement est alors située dans la chambre 21 de sorte à être protégée par le jeu réduit 17 d'étanchéité relativement à l'introduction de polluants. En outre, l'encombrement notamment axial de l'intégration du dispositif d'étanchéité est limité par la présence de la portée 12 de frottement dans la chambre 21, notamment sensiblement en regard axial des corps roulants 4.

En relation avec la figure, l'armature 9 présente, en une seule pièce, une couronne intérieure 22 et une couronne extérieure 23 portant respectivement l'élément d'étanchéité dynamique 11 et le secteur extérieur 15, lesdites couronnes étant reliées par une paroi d'association 24 de ladite armature au premier organe 1. Plus précisément, le cadre rigide 10 comprend un repli formant la paroi 24 sur laquelle s'étend la portée 20 d'association, et deux supports 25, 26 de respectivement une couronne 22, 23.

Le support extérieur 26 présente une portée 27 sensiblement radiale de mise en appui axial du secteur extérieur 15 sur l'extrémité de l'excroissance 7, notamment en formant butée de fin d'emmanchement de l'armature 9, ainsi qu'un bord libre 28 s'étendant autour de ladite excroissance. Le support intérieur 25 présente une portée 29 sensiblement radiale de liaison à la portée d'association 20, ainsi qu'un bord libre 30 de support des lèvres 11a-11c d'étanchéité.

De façon avantageuse, l'armature 9 présente un corps 13 formant le secteur extérieur 15, notamment la portée convexe 18. En variante, la portée convexe 18 peut être formée au moins partiellement sur l'armature rigide 10.

Sur la figure, l'élément d'étanchéité dynamique 11 et le secteur extérieur 15 sont formés sur un même corps 13. Ainsi, le corps 13 présente une portion intérieure sur laquelle les lèvres 11a-11c sont formées, une portion de liaison recouvrant le repli du cadre rigide 10 et une portion extérieure sur laquelle un cordon annulaire 31 est formé en présentant la portée convexe 18.

En outre, le corps 13 présente un bourrelet 40 qui est disposé en appui sur l'excroissance 7 pour former étanchéité statique, le bord libre 28 du cadre rigide 10 étant disposé dans ledit bourrelet. Ainsi, on empêche l'introduction de polluants entre l'armature 9 et l'excroissance 7.

Suivant l'invention, la portée convexe 18 présente une géométrie complémentaire à la géométrie de la gorge concave 19, ladite portée étant décalée par rapport à ladite gorge d'une distance notamment axiale qui est suffisante pour former le jeu réduit 17 d'étanchéité à leur interface. En particulier, le jeu réduit 17 d'étanchéité présente une dimension qui est inférieure à 50% de l'épaisseur du cordon 31 portant la portée convexe 18.

Pour améliorer encore la fonction de chicanage, le secteur extérieur 15 peut présenter :
- une portée plane 32 qui est disposée à l'intérieur de la portée convexe 18 et en regard d'une portée plane 33 de la portion extérieure 16 de la paroi 8 pour former à leur interface une portion intérieure du jeu réduit 17 d'étanchéité ; et/ou
- une portée plane 34 qui est disposée à l'extérieur de la portée convexe 18 et en regard d'une portée plane 35 de la portion extérieure 16 de la paroi 8 pour former à leur interface une portion extérieure du jeu réduit 17 d'étanchéité.

Sur la figures, deux portées planes 32, 34 sont formées sur le corps 13 de part et d'autre du cordon 31, lesdites portées s'étendant radialement en regard d'une portée plane radiale 33, 35 de la paroi 8 avec un espacement sensiblement égal à celui de la portée convexe 18 par rapport à la gorge concave 19, afin de former un jeu réduit 17 d'étanchéité de dimension axiale sensiblement constante.

## Revendications

1. Palier à roulement comprenant deux organes (1, 2) et des corps roulants (4) disposés dans un espace de roulement (3) formé entre lesdits organes pour permettre leur rotation relative autour d'un axe, au moins un côté de l'espace de roulement (3) présentant une ouverture annulaire (6) qui est équipée d'un dispositif d'étanchéité comprenant une armature (9) solidaire d'un premier organe (1) et une paroi (8) solidaire du deuxième organe (2), ladite armature étant équipée :
- d'un élément d'étanchéité dynamique (11) qui présente au moins une lèvre (11a-11c) disposée en contact frottant sur une portée intérieure (12) de la paroi (8) ;
- d'un secteur extérieur (15) disposé en regard d'une portion extérieure (16) de la paroi (8) en formant à leur interface un jeu réduit (17) d'étanchéité ;
ledit palier étant **caractérisé en ce que** le secteur extérieur (15) présente une portée convexe (18) qui est disposée au moins partiellement dans une gorge concave (19) formée dans la portion extérieure (16) de la paroi (8), le jeu réduit (17) d'étanchéité étant formé au moins partiellement à l'interface entre ladite portée convexe et ladite gorge, et la portée convexe (18) présente une géométrie complémentaire à la géométrie de la gorge concave (19), ladite portée étant décalée par rapport à ladite gorge d'une distance suffisante pour former le jeu réduit (17) d'étanchéité à leur interface.

2. Palier à roulement selon la revendication 1, **caractérisé en ce que** le premier organe (1) présente une excroissance (7) sur laquelle l'armature (9) est fixée par l'intermédiaire d'une portée d'association (20), l'élément d'étanchéité dynamique (11) - respectivement le secteur extérieur (15) - étant disposé à l'intérieur - respectivement à l'extérieur - de ladite portée d'association.

3. Palier à roulement selon la revendication 2, **caractérisé en ce que** le secteur extérieur (15) est disposé en appui sur l'excroissance (7).

4. Palier à roulement selon l'une des revendications 2 ou 3, **caractérisé en ce que** le secteur extérieur (15) délimite une chambre annulaire (21) débouchant d'une part, dans l'espace de roulement (3) et, d'autre part, dans le jeu réduit (17) d'étanchéité.

5. Palier à roulement selon l'une quelconque des revendications 1 à 4, **caractérisé en ce que** l'armature (9) présente, en une seule pièce, une couronne intérieure (22) et une couronne extérieure (23) portant respectivement l'élément d'étanchéité dynamique (11) et le secteur extérieur (15), lesdites couronnes étant reliées par une paroi d'association (24) de ladite armature au premier organe (1).

6. Palier à roulement selon l'une quelconque des revendications 1 à 5, **caractérisé en ce que** l'armature (9) présente un cadre rigide (10) sur lequel est associé au moins un corps (13) formant l'élément d'étanchéité dynamique (11) et/ou le secteur extérieur (15).

7. Palier à roulement selon la revendication 6, **caractérisé en ce que** la portée convexe (18) du secteur extérieur (15) est formée sur un corps (13) et/ou sur le cadre rigide (10).

8. Palier à roulement selon l'une des revendications 6 ou 7, **caractérisé en ce que** l'élément d'étanchéité dynamique (11) et le secteur extérieur (15) sont formés sur un même corps (13).

9. Palier à roulement selon l'une quelconque des revendications 1 à 8, **caractérisé en ce que** le secteur extérieur (15) présente une portée plane (32) qui est disposée à l'intérieur de la portée convexe (18) et en regard d'une portée plane (33) de la portion extérieure (16) de la paroi (8) pour former à leur interface une portion intérieure du jeu réduit (17) d'étanchéité.

10. Palier à roulement selon l'une quelconque des revendications 1 à 9, **caractérisé en ce que** le secteur extérieur (15) présente une portée plane (34) qui est disposée à l'extérieur de la portée convexe (18) et en regard d'une portée plane (35) de la portion extérieure (16) de la paroi (8) pour former à leur interface une portion extérieure du jeu réduit (17) d'étanchéité.

11. Palier à roulement selon l'une quelconque des revendications 1 à 10, **caractérisé en ce qu'**au moins la portion extérieure (16) de la paroi (8) s'étend radialement, le secteur extérieur (15) et l'éventuelle excroissance (7) étant disposés en regard axial par rapport à ladite portion.

12. Palier à roulement selon l'une quelconque des revendications 1 à 11, **caractérisé en ce que** le jeu réduit (17) d'étanchéité présente une géométrie annulaire formée axialement en s'étendant essentiellement radialement à l'interface entre le secteur extérieur (15) et la portion extérieure (16) de la paroi (8).

13. Palier à roulement selon l'une quelconque des revendications 1 à 12, **caractérisé en ce que** la paroi (8) est formée sur le deuxième organe (2).

## Patentansprüche

1. Wälzlager, zwei Organe (1, 2) und Rollkörper (4) umfassend, die in einem Wälzraum (3) angeordnet sind, der zwischen den Organen gebildet ist, um deren relative Drehung um eine Achse zu erlauben, wobei mindestens eine Seite des Wälzraumes (3) eine ringförmige Öffnung (6) aufweist, die mit einer Abdichtvorrichtung ausgestattet ist, die eine Armatur (9) umfasst, die fest mit einem ersten Organ (1) und einer Wand (8) verbunden ist, die fest mit dem zweiten Organ (2) verbunden ist, wobei die Armatur ausgestattet ist:
- mit einem dynamischen Abdichtelement (11), das mindestens eine Lippe (11a-11c) aufweist, die in Reibkontakt auf einer inneren Tragweite (12) der Wand (8) angeordnet ist;
- mit einem äußeren Sektor (15), der gegenüber einem äußeren Abschnitt (16) der Wand (8) angeordnet ist, indem an ihrer Schnittstelle ein reduziertes Abdichtspiel (17) gebildet wird;
wobei das Lager **dadurch gekennzeichnet ist, dass** der äußere Sektor (15) eine konvexe Tragweite (18) aufweist, die mindestens teilweise in einer konkaven Nut (19) angeordnet ist, die in dem äußeren Abschnitt (16) der Wand (8) gebildet wird, wobei das reduzierte Abdichtspiel (17) mindestens teilweise an der Schnittstelle zwischen der konvexen Tragweite und der Nut gebildet wird, und die konvexe Tragweite (18) eine ergänzende Geometrie zu der Geometrie der konkaven Nut (19) aufweist, wobei die Tragweite im Verhältnis zu der Nut um eine Distanz versetzt ist, die ausreichend ist, um das reduzierte Abdichtspiel (17) an ihrer Schnittstelle zu bilden.

2. Wälzlager nach Anspruch 1, **dadurch gekennzeichnet, dass** das erste Organ (1) eine Ausstülpung (7) aufweist, auf der die Armatur (9) anhand einer Verbundtragweite (20) fixiert ist, wobei das dynamische Abdichtelement (11) - beziehungsweise der äußere Sektor (15) - innerhalb - beziehungsweise außerhalb - der Verbundtragweite angeordnet ist.

3. Wälzlager nach Anspruch 2, **dadurch gekennzeichnet, dass** der äußere Sektor (15) an der Ausstülpung (7) anliegend angeordnet ist.

4. Wälzlager nach einem der Ansprüche 2 oder 3, **dadurch gekennzeichnet, dass** der äußere Sektor (15) eine ringförmige Kammer (21) eingrenzt, die einerseits in den Wälzraum (3), und andererseits in das reduzierte Abdichtspiel (17) mündet.

5. Wälzlager nach einem der Ansprüche 1 bis 4, **dadurch gekennzeichnet, dass** die Armatur (9) in einem einzigen Stück einen inneren Kranz (22) und einen äußeren Kranz (23) aufweist, die jeweils das dynamische Abdichtelement (11) und den äußeren Sektor (15) tragen, wobei die Kränze durch eine Verbundwand (24) der Armatur mit dem ersten Organ (1) verbunden sind.

6. Wälzlager nach einem der Ansprüche 1 bis 5, **dadurch gekennzeichnet, dass** die Armatur (9) einen starren Rahmen (10) aufweist, auf dem mindestens ein Körper (13) zugeordnet ist, der das dynamische Abdichtelement (11) und/oder den äußeren Sektor (15) bildet.

7. Wälzlager nach Anspruch 6, **dadurch gekennzeichnet, dass** die konvexe Tragweite (18) des äußeren Sektors (15) auf einem Körper (13) und/oder auf dem starren Rahmen (10) gebildet ist.

8. Wälzlager nach einem der Ansprüche 6 oder 7, **dadurch gekennzeichnet, dass** das dynamische Abdichtelement (11) und der äußere Sektor (15) auf einem selben Körper (13) gebildet sind.

9. Wälzlager nach einem der Ansprüche 1 bis 8, **dadurch gekennzeichnet, dass** der äußere Sektor (15) eine ebene Tragweite (32) aufweist, die innerhalb der konvexen Tragweite (18) und gegenüber einer ebenen Tragweite (33) des äußeren Abschnitts (16) der Wand (8) angeordnet ist, um an deren Schnittstelle einen inneren Abschnitt des reduzierten Abdichtspiels (17) zu bilden.

10. Wälzlager nach einem der Ansprüche 1 bis 9, **dadurch gekennzeichnet, dass** der äußere Sektor (15) eine ebene Tragweite (34) aufweist, die außerhalb der konvexen Tragweite (18) und gegenüber einer ebenen Tragweite (35) des äußeren Abschnitts (16) der Wand (8) angeordnet ist, um an deren Schnittstelle einen äußeren Abschnitt des reduzierten Abdichtspiels (17) zu bilden.

11. Wälzlager nach einem der Ansprüche 1 bis 10, **dadurch gekennzeichnet, dass** sich mindestens der äußere Abschnitt (16) der Wand (8) radial erstreckt, wobei der äußere Sektor (15) und die eventuelle Ausstülpung (7) im Verhältnis zu dem Abschnitt axial gegenüber angeordnet sind.

12. Wälzlager nach einem der Ansprüche 1 bis 11, **dadurch gekennzeichnet, dass** das reduzierte Abdichtspiel (17) eine ringförmige Geometrie aufweist, die axial gebildet wird, indem sie sich im Wesentlichen radial zu der Schnittstelle zwischen dem äußeren Sektor (15) und dem äußeren Abschnitt (16) der Wand (8) erstreckt.

13. Wälzlager nach einem der Ansprüche 1 bis 12, **dadurch gekennzeichnet, dass** die Wand (8) auf dem zweiten Organ (2) gebildet wird.

## Claims

1. Roller bearing comprising two members (1, 2) and rolling bodies (4) arranged in a rolling space (3) formed between said members in order to allow for the relative rotation thereof about an axis, at least one side of the rolling space (3) having an annular opening (6) which is provided with a sealing device comprising an armature (9) integral with a first member (1) and a wall (8) integral with the second member (2), said armature being provided with:
- a dynamic sealing element (11) which has at least one lip (11a-11c) arranged in friction contact on an inner surface (12) of the wall (8);
- an outer sector (15) arranged facing an outer portion (16) of the wall (8) by forming at their interface a reduced sealing clearance (17);
said bearing being **characterised in that** the outer sector (15) has a convex surface (18) which is arranged at least partially in a concave groove (19) formed in the outer portion (16) of the wall (8), the reduced sealing clearance (17) being formed at least partially at the interface between said convex surface and said groove, and the convex surface (18) has a geometry complementary with the geometry of the concave groove (19), said surface being offset with respect to said groove by a distance that is sufficient to form the reduced sealing clearance (17) at their interface.

2. Roller bearing according to claim 1, **characterised in that** the first member (1) has a protrusion (7) where on the armature (9) is fastened by the intermediary of an association surface (20), the dynamic sealing element (11) - respectively the outer sector (15) - being arranged inside - respectively outside - said association surface.

3. Roller bearing according to claim 2, **characterised in that** the outer sector (15) is arranged bearing against the protrusion (7).

4. Roller bearing according to one of claims 2 or 3, **characterised in that** the outer sector (15) delimits an annular chamber (21) opening on the one hand, in the rolling space (3) and, on the other hand, in the reduced sealing clearance (17).

5. Roller bearing according to any of claims 1 to 4, **characterised in that** the armature (9) has, in a single piece, an inner crown (22) and an outer crown (23) bearing respectively the dynamic sealing element (11) and the outer sector (15), said crowns being connected by an association wall (24) of said armature to the first member (1).

6. Roller bearing according to any of claims 1 to 5, **characterised in that** the armature (9) has a rigid frame (10) whereon at least one body (13) is associated forming the dynamic sealing element (11) and/or the outer sector (15) .

7. Roller bearing according to claim 6, **characterised in that** the convex surface (18) of the outer sector (15) is formed on a body (13) and/or on the rigid frame (10).

8. Roller bearing according to one of claims 6 or 7, **characterised in that** the dynamic sealing element (11) and the outer sector (15) are formed on the same body (13) .

9. Roller bearing according to any of claims 1 to 8, **characterised in that** the outer sector (15) has a planar surface (32) which is arranged inside the convex surface (18) and facing a planar surface (33) of the outer portion (16) of the wall (8) in order to form at their interface an inner portion of the reduced sealing clearance (17).

10. Roller bearing according to any of claims 1 to 9, **characterised in that** the outer sector (15) has a planar surface (34) which is arranged outside the convex surface (18) and facing a planar surface (35) of the outer portion (16) of the wall (8) in order to form at their interface an outer portion of the reduced sealing clearance (17).

11. Roller bearing according to any of claims 1 to 10, **characterised in that** at least the outer portion (16) of the wall (8) extends radially, the outer sector (15) and the possible protrusion (7) being arranged axially facing in relation to said portion.

12. Roller bearing according to any of claims 1 to 11, **characterised in that** the reduced sealing clearance (17) has an annular geometry formed axially by extending substantially radially at the interface between the outer sector (15) and the outer portion (16) of the wall (8).

13. Roller bearing according to any of claims 1 to 12, **characterised in that** the wall (8) is formed on the second member (2).
